(19) Europäisches Patentamt
European Patent Office
Office européen des brevets

(11) **EP 1 184 856 B1**

(12) **EUROPEAN PATENT SPECIFICATION**

(45) Date of publication and mention
of the grant of the patent:
**03.12.2008 Bulletin 2008/49**

(51) Int Cl.:
*G11B 7/135* (2006.01)    *G02B 5/00* (2006.01)
*G02B 5/30* (2006.01)

(21) Application number: **01302937.6**

(22) Date of filing: **29.03.2001**

(54) **Optical pickup comprising an aberration correction element**

Optisches Abtastgerät ausgerüstet mit Korrekturelement für Aberration

Tête optique comprenant un élément de correction d'aberration

(84) Designated Contracting States:
**DE FR GB NL**

(30) Priority: **08.08.2000 KR 2000045889**

(43) Date of publication of application:
**06.03.2002 Bulletin 2002/10**

(73) Proprietor: **SAMSUNG ELECTRONICS CO. LTD.
Kyungki-do,
Seoul (KR)**

(72) Inventors:
• **Kim, Tae-kyung
Seoul (KR)**
• **Ahn, Young-man
Paldal.gu,
Suwon-city,
Kyungki-do (KR)**
• **Chung, Chong-sam
Paldal.gu,
Suwon-city,
Kyungki-do (KR)**

• **Suh, Hea-jung
Seonnam-city,
Kyungki-do (KR)**

(74) Representative: **Clark, David James et al
Appleyard Lees
15 Clare Road
Halifax
HX1 2HY (GB)**

(56) References cited:
**EP-A- 0 936 604        US-A- 5 745 465
US-A- 5 867 315**

• **PATENT ABSTRACTS OF JAPAN vol. 018, no. 339
(P-1760), 27 June 1994 (1994-06-27) -& JP 06
082725 A (ASAHI OPTICAL CO LTD), 25 March
1994 (1994-03-25)**
• **PATENT ABSTRACTS OF JAPAN vol. 2000, no.
01, 31 January 2000 (2000-01-31) -& JP 11 296890
A (SAMSUNG ELECTRONICS CO LTD), 29
October 1999 (1999-10-29)**
• **PATENT ABSTRACTS OF JAPAN vol. 1998, no.
05, 30 April 1998 (1998-04-30) -& JP 10 027373 A
(HITACHI LTD), 27 January 1998 (1998-01-27)**

EP 1 184 856 B1

**Description**

The present invention relates to an optical pickup adopting an aberration correction element, which can correct chromatic aberration caused by variation of power from a light source during changing of a mode for information recording or reproduction for a high-density recording medium, and which is compatible for high-density recording media and relatively low density digital versatile disc (DVD) family media.

In optical recording and reproduction systems, the recording density is determined by the size of the focused spot. In general, the size of the focused spot (S) is proportional to the wavelength ($\lambda$), and inversely proportional to the numerical aperture (NA).

To reduce the spot size, high-density optical pickups under development are expected to adopt a light source emitting blue light, and an objective lens having at least 0.6 NA, such that a higher information recording density than existing compact disc (CD) and DVD family recording media can be achieved.

The refractive index of optical materials utilized in manufacturing an objective lens for optical pickups, such as glass and plastic, suddenly varies for a wavelength shorter than 650 nm. For this reason, when a wavelength of an incident light beam slightly varies in the short wavelength range, a considerable amount of chromatic aberration occurs.

Optical power of optical recording/reproducing systems varies according to the mode, i.e., record mode and reproduction mode. Accordingly, the wavelength of a light beam emitted from a light source varies within the range of about $\pm$ 2 nm according to the mode. As the output power of a light source is increased to record information, the wavelength of light from the light source becomes longer. As for an optical pickup for high-density recording and reproduction, which employs a blue light source and an objective lens optimized for a certain wavelength, a large amount of chromatic aberration is caused by a wavelength variation when the mode is changed for recording or reproducing information.

Such chromatic aberration can be corrected by defocusing of an objective lens. However, it takes a relatively longer period of time to drive the objective lens using an actuator to follow a wavelength variation. Thus, as information recording and reproduction is repeated, the quality of recording and reproduction signals during the period of time deteriorates.

Thus, an optical pickup for high-density recording and reproduction needs an optical element capable of effectively reducing chromatic aberration caused by a change in wavelength, which occurs in changing the mode for recording and reproduction. In addition, the compatibility with existing DVDs needs to be considered for the high-density optical pickup. However, for DVD-recordable (DVD-R) and multi-layered DVDs, it is necessary to adopt a red light source because of the notable low reflectivity of these disks with respect to short wavelength light. Therefore, a red light source must be employed for these disks.

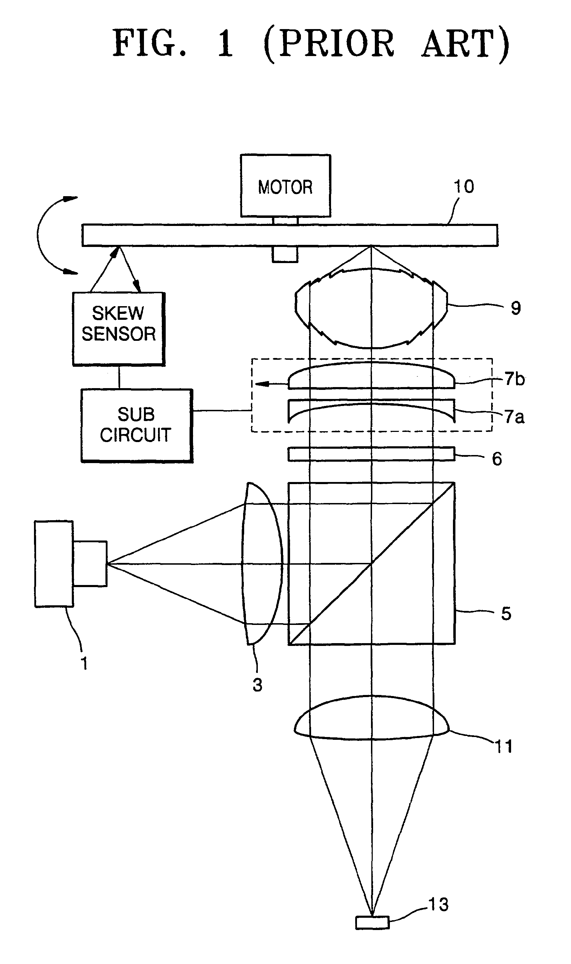

A conventional optical pickup adopting a refracting and diffracting objective lens 9 is shown in Figure 1. The refracting and diffracting objective lens 9 focuses light reflected by a beam splitter 5, after having been emitted from a semiconductor laser 1 and collimated by a collimating lens 3, on the recording surface of an optical disc 10. The refracting and diffracting objective lens 9 is an aspherical lens, which has aspherical light receiving and emitting surfaces, and diffraction patterns on the aspherical surfaces. The refracting and diffracting objective lens 9 is constructed as a combination of the refracting and diffracting lenses.

Assuming that $V$ is Abbe's number of refracting lens part and $V_{HOE}$ is Abbe's number of diffracting lens part, $n_1$, $n_2$ and $n_3$ are the refractive indices of the refracting and diffracting objective lens 9 with respect to the central, shortest and longest wavelengths $\lambda_1$, $\lambda_2$ and $\lambda_3$ of light emitted from the semiconductor laser 1, respectively, the refracting and diffracting objective lens 9 is designed such that it satisfies the condition:

$$(1+V_{HOE}/V)(n_2-1) > 0.572,$$

where $V = (n_2-1)/(n_1-n_3)$ and $V_{HOE} = \lambda_2(\lambda_1-\lambda_3)$. The conventional refracting and diffracting objective lens 9 has an NA of 0.7 or more, and can eliminate chromatic aberration caused by a wavelength variation of light emitted from the semiconductor laser.

In Figure 1, reference numerals 7a and 7b denote first and second skew plates for correcting coma aberration caused by skewing of the optical disk 1 in a reproduction mode. The first and second skew plates 7a and 7b are arranged such that their convex and concave surfaces face outward. As the first and second skew plates 7a and 7b are moved in the opposite directions, the shape of an wavefront changes into the inversed shape of coma aberration, thereby canceling out the coma aberration caused by skewing of the optical disc. Reference numeral 6 denotes a quarter-wave plate, reference numeral 11 represents a sensing lens, and reference numeral 13 denotes a photodetector.

In terms of the properties of diffraction elements, the optical pickup adopting the refracting and diffracting objective lens 9 has a low light efficiency, so that it is difficult to obtain high optical power sufficient to record information. The conventional refracting and diffracting objective lens 9 shows a low light efficiency with respect to a light beam whose wavelength is largely deviated from the initial wavelength for the objective lens, so that it cannot be adopted for an optical pickup using different wavelengths of light.

JP-A-06082725 discloses a chromatic aberration correcting element having a light entrance face and a light exit face. A plurality of step-like planes are formed on the light entrance face. The light exit face is composed of a single plane. The planes at the entrance face are formed as annular segments that are concentric with the optical axis. The dimensions of the device are such that at a first wavelength $\lambda_0$, plane waves entering the aberration correcting device will emerge as a plane wave. However, if the wavelength changes to $\lambda_0 + \Delta\lambda$, the emerging wavefront is a generally spherical wave.

JP-A-11016194 discloses a compatible optical pickup comprising: a first light source emitting a first light beam of a first polarisation, the first light beam having a wavelength suitable for a first type of recording medium; a second light beam of a second polarisation perpendicular to the first one, the second light beam having a wavelength suitable for a second type of recording medium; an objective lens; at least one optical path changing means; a photo detector; and an aberration correction member that transmits unchanged the first light beam of a first polarisation and corrects the spherical aberration for the second light beam of the second polarisation.

An aim of the present invention is to provide an optical pickup adopting an aberration correction element capable of correcting chromatic aberration caused by a wavelength variation of shorter wavelength light during changing of a mode to record information on or reproduce information from a high-density recording medium, the optical pickup having a high light efficiency and being compatible for high-density recording media and relatively low-density recording media using different wavelengths of light.

According to the present invention, there is provided an optical pickup comprising a first light source, an objective lens for focusing a light beam from the first light source to form a light spot on a recording medium, an optical path changing means arranged on the optical path between the first light source and the objective lens, for altering the travelling path of the light beam from the first light source, and a photodetector for receiving the light beam through the objective lens and the optical path changing means after having been reflected from the recording medium, the optical pickup being such that the first light source emits a first light beam as a first polarized beam having a relatively short wavelength suitable for a high-density recording medium; the optical pickup further comprising a first aberration correction element, for correcting chromatic aberration caused by a wavelength variation of the first light beam emitted from the first light source, the first aberration correction element (130) being arranged on the optical path between the optical path changing means (103) and the objective lens.

The first and second retardation members of the first aberration correction member are combined with each other; the first retardation member has a stepped convex pattern, the stepped convex pattern including a plurality of steps being concentric around the optical axis, and the second retardation member has a stepped concave pattern at one side facing the first retardation member or at the opposite side, the stepped concave pattern corresponding to the stepped convex pattern of the first retardation member; and the first aberration correction member is designed such that a phase difference caused by the first and second retardation members increases or decrease with increasing distance from the optical axis. Preferably, the pitch in the optical axis's direction of each of the plurality of steps for the first and second retardation members is an integer multiple of $\lambda 0/(n0a-n0b)$, where $\lambda 0$ is the wavelength of the first polarized light beam for which the objective lens is designed, and $n0a$ and $n0b$ are the refractive indices of the first and second retardation members, respectively, for the wavelength $\lambda 0$.

The optical pickup further comprises a second light source for emitting a second light beam as a second polarized beam perpendicular to the first polarization of the first light beam, the second light beam having a relatively long wavelength suitable for a low-density recording medium. In this way, the optical pickup further comprises a second aberration correction member arranged on the optical path between the optical path changing means and the objective lens, for selectively causing a phase difference of an incident light beam according to the polarization of the incident light beam, the second aberration correction member including a third retardation member with at least two stepped convex patterns each of which has a plurality of steps, and a fourth retardation member with at least two stepped concave patterns corresponding to the stepped convex patterns, so that chromatic aberration caused by a wavelength variation with respect to the second light beam and/or spherical aberration caused by a substrate thickness variation with respect to the low-density recording medium are corrected.

It is preferable that the first light beam is blue light and/or the second light beam is red light; and the high-density recording medium is a recording medium having a higher density than digital versatile disc (DVD) family media, and/or the low-density recording medium is a DVD family recording medium. It is preferable that the thickness of substrate of the high-density recording medium is 0.6 mm or less, and/or the thickness of substrate of the low-density recording medium is about 0.6 mm. It is preferable that the optical path changing means is constructed such that the first light source and the second light sources are perpendicular to each other, and both the first and second light sources are aligned with the optical axis.

Alternatively, the second light source first and second light sources can be arranged close to each other. Preferably, one of the first and second light sources is aligned with the optical axis, and the other is off the optical axis near to the one light source, and the first or second aberration correction element is designed such that a field aberration with respect to the light beam emitted from the other light source due to the arrangement of the other light source is corrected. In this way, the optical pickup preferably further comprises a hologram element on the optical path between the optical path changing means and the photodetector, for correcting a field aberration with respect to the light beam heading toward the photodetector through the first and/or the second aberration correction elements after having been emitted from the other light source and reflected from a corresponding recording medium.

For a better understanding of the invention, and to show how embodiments of the same may be carried into effect, reference will now be made, by way of example, to the accompanying diagrammatic drawings in which:

Figure 1 illustrates a conventional optical pickup adopting a refracting and diffracting objective lens;

Figures 2 through 4 are sectional views of alternative examples of an aberration correction element ;

Figure 5 illustrates the optical arrangement of an example of an optical pickup adopting an aberration correction element ;

Figures 6A and 6B illustrate aberration in a reproduction and record mode, respectively, when the objective lens of Figure 5 optimized for the wavelength of reproduction light for a high-density recording medium is adopted;

Figure 7 illustrates the optical arrangement of an embodiment of an optical pickup adopting aberration correction elements according to the present invention;

Figure 8 illustrates aberration occurring when a longer wavelength of light is focused on a low-density recording medium by the objective lens shown in Figure 7, which is optimized for a shorter wavelength of reproduction light and for the thickness of the high-density recording medium;

Figures 9A through 9C illustrate deformations of the wavefront incurred as it passes through the first and second aberration correction elements arranged in the optical pickup of Figure 7 in the reproduction and record modes with a high-density recording medium, and a reproduction mode with a low-density recording medium, respectively;

Figure 10 illustrates the optical arrangement of another embodiment of the optical pickup adopting aberration correction elements according to the present invention; and

Figure 11 illustrates field aberration in the optical pickup of Figure 10 which occurs when light is emitted from a light source tilted with respect to the optical axis.

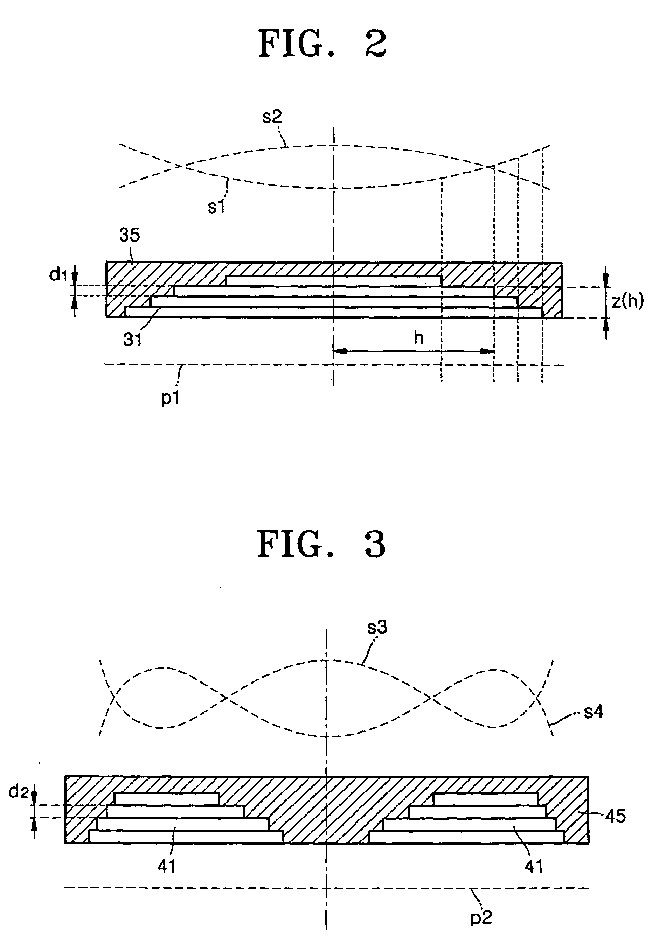

Referring to Figure 2, an example of an aberration correction element is a combination of a first retardation member 31 and a second retardation member 35 whose refractive indices are different for a first polarized light beam. Each of the first and second retardation members 31 and 35 has a stepped pattern being concentric around the optical axis, wherein the stepped pattern of the first retardation member 31 is complementary to that of the second retardation member 35. In particular, the first retardation member 31 has a stepped convex pattern at one side thereof, which is concentric around the optical axis. The second retardation member 35 has a stepped concave pattern at one side thereof, which is fitted to the stepped convex pattern of the first retardation member 35. The second retardation member 35 is arranged such that its stepped concave pattern faces the stepped convex pattern or the opposite side of the first retardation member 31. Figure 2 illustrates the first and second retardation members 31 and 35 which are combined such that their stepped convex and concave patterns face each other.

The first and second retardation members 31 and 35 have different refractive indexes for a first polarized light beam, and substantially the same refractive index for a second polarized light beam perpendicular to the first polarized light beam, such that a phase difference of an incoming light beam occurs according to the polarization of incoming light beam as it passes through the first and second retardation members 31 and 35.

The polarization-dependent refraction properties of the first and second retardation members 31 and 35 can be achieved by using an anisotropic material with respect to refractive index, and by appropriately arranging the optic axes of the anisotropic materials such that, for example, the refraction index of the first retardation member 31 varies depending on the polarization of incident light beam, and is different for the first and second polarized light beams; and the second retardation member 35 has a constant refractive index regardless of the polarization of incident light beam. It is preferable that the first and second retardation members 31 and 35 are formed of the same anisotropic material. In this way, the first retardation member 31 is arranged such that it has an ordinary refractive index or an extraordinary refractive index according to the polarization of incident light beam, and the second retardation member 35 is arranged such that it has an ordinary refractive index regardless of the polarization of incident light beam. The anisotropic material is classified into a positive type and negative type: positive type for the material having a larger extraordinary refractive index than an ordinary refractive index, and negative type for the reversed case.

The aberration correction element is designed such that the pitch $d1$ of a single step of each of the stepped convex pattern and the stepped concave pattern is an integer multiple of $\lambda 0/(n0a-n0b)$, where $\lambda 0$ is the wavelength of a first polarized light beam for which an objective lens to be used is designed, and $n0a$ and $n0b$ are refractive indices of the first and second retardation members 31 and 35, respectively, for the first polarized light beam.

With regard to the operation of the aberration correction element, a phase difference caused by the first and second retardation members 31 and 35 with respect to a wavelength variation of the first polarized light beam from $\lambda 0$ to $\lambda 1$ is expressed as $((n1a-n1b) \cdot z(h))$, where $n1a$ and $n1b$ are the refractive indices of the first and second retardation members 31 and 35 for the wavelength $\lambda 1$, and $h$ is a distance from the optical axis, and $z(h)$ is the height from a light receiving surface of the first or second retardation member 31 or 35 to a particular step of the first or second retardation member 31 or 35 at the distance $h$. The phase difference with respect to the wavelength variation from $\lambda 0$ to $\lambda 1$ discontinuously increases or decreases according to the distance from the optical axis.

The aberration correction element , which has the configuration described above, is appropriate for correcting chromatic aberration of light from a condensing lens, such as an objective lens of an optical pickup to be described later, which is caused by a relatively small variation of wavelength of incident light. In other words, the degree of such chromatic aberration caused by the relatively small wavelength variation increases or decreases symmetrically around the optical axis with increasing distance from the optical axis. Thus, by using the aberration correction element of Figure 2, which has a stepped pattern being concentric around the optical axis, chromatic aberration caused by the wavelength variation of the first polarized light beam can be corrected.

For example, in the configuration of the aberration correction element shown in Figure 2, where the first retardation member 31 is arranged at the light receiving side and the second retardation member 35 is arranged at the light emitting side, when the first retardation member 31 has a larger refractive index than the second retardation member 35 for the first polarized light beam, and when a planar-wavefront first polarized light beam having a wavelength, which is deviated from the wavelength for which the objective lens is designed, enters the aberration correction element of Figure 2, the first polarized light is shaped into a wavefront s1 which is convex toward the aberration correction element. This convex wavefront results in because the degree of retardation by the aberration correction element becomes smaller with increasing distance from the optical axis.

In contrast, when the second retardation member 35 of Figure 2 has a larger refractive index than the first retardation member 31 for the first polarized light beam, an incoming first polarized light beam having a planar wavefront is shaped into a wavefront s2, which is concave toward the aberration correction element, opposite to the wavefront s1.

When an optical system with a minor wavelength variation adopts the aberration correction element having the stepped pattern being concentric around the optical axis, as described with reference to Figure 2, chromatic aberration caused by a minor wavelength variation, for example, of a first polarized light beam, can be corrected by changing the shape of the wavefront of the incident first polarized light into the inversed shape of chromatic aberration incurred by a condensing lens.

In particular, the wavefront of light beam from the aberration correction element becomes more curvy as the number of the steps of the stepped pattern increases, and the slope of the outgoing wavefront depends on the width of each step and refractive index variations of the first and second retardation members 31 and 35 for an incident light wavelength. Accordingly, if the material for the first and second retardation members 31 and 35 is appropriately selected, and if the number of steps and the width of each step are optimized according to the desired accuracy in correcting chromatic aberration, the chromatic aberration can be effectively canceled in the optical system.

On the other hand, as described above, when the first and second retardation members 31 and 35 of the aberration correction element according to the present invention are formed of the same anisotropic material such that they have the same refractive index for a second polarized light beam perpendicular to the first polarized light beam, the aberration correction element causes a change in shape of the outgoing wavefront with respect to the first polarized light beam depending on a wavelength variation of the first polarized light beam, while just passing the second polarized light beam irrespective of the wavelength variation, without changing the shape of outgoing wavefront. Thus, the aberration correction element can be adopted for an optical pickup using two wavelengths of light, which will be described later. In this case, if the first and second retardation members 31 and 35 are a positive type, the planar-wavefront of the first polarized light beam is shaped into the wavefront s1. If the first and second retardation members 31 and 35 are a negative type, the planar-wavefront of the first polarized light beam is shaped into the wavefront s2, as shown in Figure 2.

Although the aberration correction element is described with reference to the configuration of Figure 2, it will appreciated that various changes and modifications are possible according to uses, for example, for use in an optical pickup.

For example, as shown in Figure 3, the aberration correction element can be designed to have at least two stepped patterns for an optical system using two considerably different wavelengths of light, for example, blue light and red light, such that chromatic aberration incurred by a condensing lens due to a relatively large wavelength variation from the wavelength for which the objective lens is designed can be corrected. The embodiment of the aberration correction element shown in Figure 3 includes a pair of third retardation members 41 each having a stepped convex pattern, which are symmetrical around the optical path, and a fourth retardation member 45 with stepped concave patterns corresponding to the convex patterns of the third retardation members 41. The third and fourth retardation members 41 and 45 are formed of substantially the same materials as those for first and second retardation members 31 and 35.

When red light enters a condensing lens optimized for blue light, chromatic aberration occurs. In addition, like an optical pickup described later, when the optical system is compatible for different formats recording media, spherical aberration caused by the difference in thickness of the recording media also occurs. As a result, as red light is condensed onto the recording surface of a relatively thick recording medium, a twin-peak-like wavefront is formed by chromatic aberration and/or spherical aberration. In this case, use of the aberration correction element having at least two stepped patterns, as shown in Figure 3, can correct the aberrations by shaping an incoming planar-wavefront light beam p2 into the inversed shape of the chromatic aberration and/or spherical aberration.

Under the assumption that $\lambda0'$ is the wavelength of planar-wavefront incoming light beam p2 for which an objective lens to be used is designed, and $n0a'$ and $n0b'$ are the refractive indices of the third and fourth retardation members 41 and 45 for the planar-wavefront light beam p2, respectively, when the pitch d2 of each step of the third and fourth retardation members 41 and 45 is not an integer multiple of $\lambda0'/(n0a'-n0b')$, the shape of the incoming planar-wavefront light beam p2 can be changed into the inversed shape of the aberration, like the wavefront s3 or s4. If the refractive index of the third retardation member 41 is larger than that of the fourth retardation member 45, the incoming planar-wavefront light beam p2 is shaped into the wavefront s3. If the refractive index of the third retardation member 41 is smaller than that of the fourth retardation member 45, the incoming planar-wavefront light beam p2 is shaped into the wavefront s4.

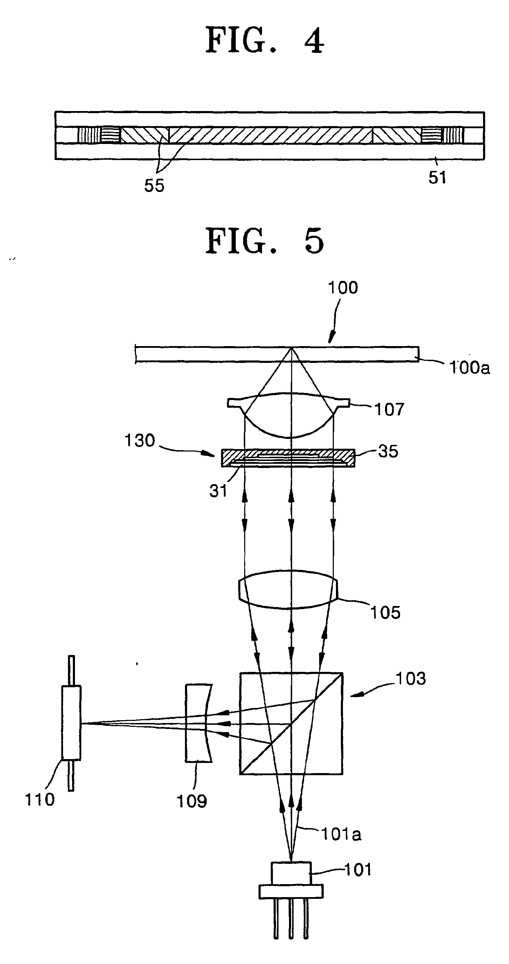

Still another aberration correction element is shown in Figure 4. The aberration correction element of Figure 4 includes fifth and sixth retardation members 51 and 55 having different refractive indices. The sixth retardation member 55 is divided into a plurality of sections having different refractive indices, and is arranged at the center or at at least one side of the fifth retardation member 51, as shown in Figure 4, such that a required phase difference occurs. The neighboring sections of the sixth retardation member 55 have different wavelengths. The thickness of the sixth retardation member 55 is consistent. Similar to the first and second retardation members 31 and 35 of the previous example, when a phase difference caused by the aberration correction element of Figure 4 with respect to a wavelength $\lambda1$ varied from the wavelength $\lambda0$ for which the objective lens is designed is expressed as $(n1a-n1b(h))\cdot d$, where $n1a$ is the refractive index of the fifth retardation member for the wavelength $\lambda1$, $n1b(h)$ is the refractive index of the section of the sixth retardation member 55, the section being separated by a distance $h$ from the optical axis, and $d$ is the thickness of the sixth retardation member, the phase difference is opposite to the aberration caused by the wavelength variation. Comparing with the first and second retardation members 31 and 35, the thickness d of the sixth retardation member 55 corresponds to the height $z(h)$ from the light receiving surface to a particular step of the first or second retardation member 31 or 35. In the present example, the width of each section of the sixth retardation member 55 matches the width of each step of the first and second retardation members 31 and 35 of Figure 2, so that the shape of wavefront changes as the wavelength of incoming light beam varies, as shown in Figure 2. It will be appreciated that the sixth retardation member 55 can be divided into sections such that the same variation of wavefront occurs, as shown in Figure 3.

The aberration correction elements described above can be varied such that a variety of aberrations as well as chromatic aberrations, for example, spherical aberration caused by adopting different formats optical recording media in a compatible optical pickup, can be corrected.

Figure 5 illustrates the optical arrangement of an example of an optical pickup adopting an aberration correction element. Referring to Figure 5, the optical pickup includes a first light source 101 for emitting a first light beam 101a having a relatively short wavelength, an objective lens 107 for focusing the first light beam 101 from the first light source 101 to form a light spot on a recording medium 100, an optical path changing means 103 for changing the traveling path of the first light beam 101a from the first light source 101, a first aberration correction element 130 arranged on the optical path between the optical path changing means 103 and the objective lens 107, for correcting chromatic aberration caused by a variation of wavelength of the first light beam 101a from the first light source 101, and a photodetector 110 for receiving the first light beam 101a passed through the objective lens 107 and the optical path changing means 103 after having been reflected by the recording medium 100.

The first light source 101 may be a semiconductor laser emitting the first light beam 101 having a relatively short wavelength, for example, blue light having a wavelength of about 405 nm. Accordingly, the first light beam 101a emitted from the first light source 101 is a light beam mainly polarized in a particular direction. It is preferable that the objective lens 107 is designed to be suitable for the wavelength of the first light beam 101a emitted from the first light source in a record or reproduction mode.

The optical path changing means 103 is disposed on the optical path between the first light source 101 and the objective lens 107, and alters the optical path of an incident beam such that the first light beam 101a from the first light source 101 heads toward the recording medium 100, and the first light beam 101a reflected by the recording medium 100 heads toward the photodetector 110. As the optical path changing means 103, a prism type beam splitter as shown in Figure 5, a plate type beam splitter, or a combination of a polarization beam splitter, or a quarter-wave plate for the wavelength of light from the first light source 101 can be used.

A collimating lens 105 for collimating light from the first light source 101 is disposed between the first light source 101 and the objective lens 107. A sensing lens 108 is further disposed on the optical path between the optical path changing means 103 and the photodetector 101.

The above-mentioned optical elements are designed and arranged to be appropriate for a high-density recording medium 100a, so-called "high-definition digital versatile disc (HD-DVD)", whose recording density is greater than that of DVD family recording media.

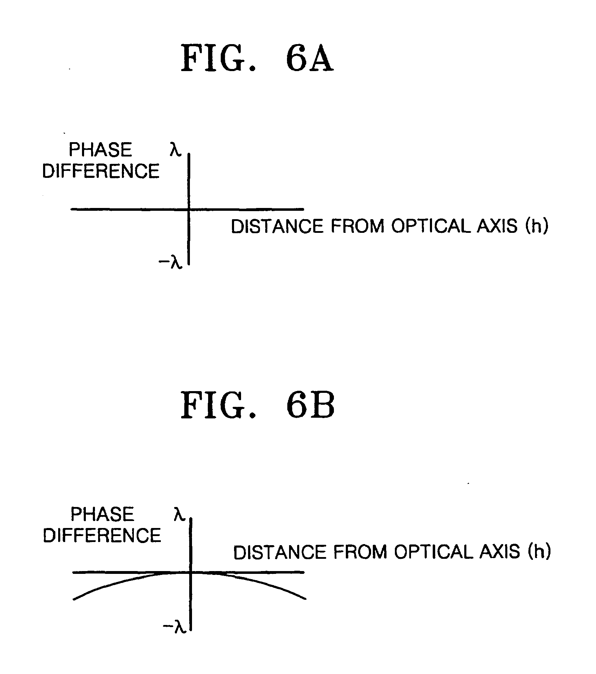

When an optical system including the objective lens 107 is designed for the wavelength of the first light beam 101a emitted from the first light source 101 in a reproduction mode, for example, 405 nm, chromatic aberration occurs in a record mode because the wavelength of the first light beam 101a become slightly longer, for example, 406 nm, to satisfy the need for increased optical power. In other words, if the first light beam 101 for a reproduction mode has a wavelength of 405 nm, and the objective lens 107 is optimized for the wavelength, as shown in Figure 6A, no chromatic aberration occurs in the reproduction mode. However, when the mode is changed to a record mode, as shown in Figure 6B, chromatic aberration occurs as the first light beam 101a passes through the objective lens 101a, due to the slight wavelength variation.

Such chromatic aberration caused by a slight wavelength variation of light between recoding and reproduction modes in an optical system adopting the high-density recording medium 101a can be corrected by the first correction element 130 according to the present invention arranged on the optical path between the optical path changing means 103 and the objective lens 107.

As the mode of an optical system adopting the high-density recording medium 110a is changed to a record or reproduction mode, the wavelength of the first light beam 101a varies within a relatively narrow range, i.e., within the range of $\pm$ 2 nm. In this way, it is preferable to use the first aberration correction element 130 having stepped convex-concave patterns being concentric around the optical axis, as described with reference to Figure 2. The stepped convex-concave patterns of the first aberration correction element 130 are designed such that the pitch in the optical axis's direction of each step is an integer multiple of 405nm/($n0a$-$n0b$), where $n0a$ and $n0b$ are the refractive indices of the first and second retardation members 32 and 35 of the first aberration correction element 130 with respect to the first light beam 101 as a 405 nm p-polarized light beam. Also, when a chromatic aberration, as illustrated in Figure 6B, is incurred by the objective lens 107 with respect to a wavelength variation from 405 nm to 406 nm of the first light beam 101a, the first aberration correction element 130 is designed to cause a phase difference expressed as (($n11a$-$n11b$)·$z$($h$)), where $n11a$ and $n11b$ are the refractive indices of the first and second retardation members 31 and 35 for the wavelength of 406 nm, and $h$ is a distance from the optical axis, and $z(h)$ is the height from the light receiving surface to a particular step of the first and second retardation member at the distance $h$. The phase difference caused by the first and second aberration correction members 31 and 35 results in a wavefront which is the inversed shape of aberrations shown in Figure 6B.

In other words, since the outgoing wavefront from the first aberration correction element 130 has the inversed shape of chromatic aberration incurred by the objective lens 107 in a record mode with respect to a slight wavelength variation of the first light beam, the chromatic aberration can be canceled by subtraction. Alternatively, the first aberration correction element 130 may have the configuration shown in Figure 4.

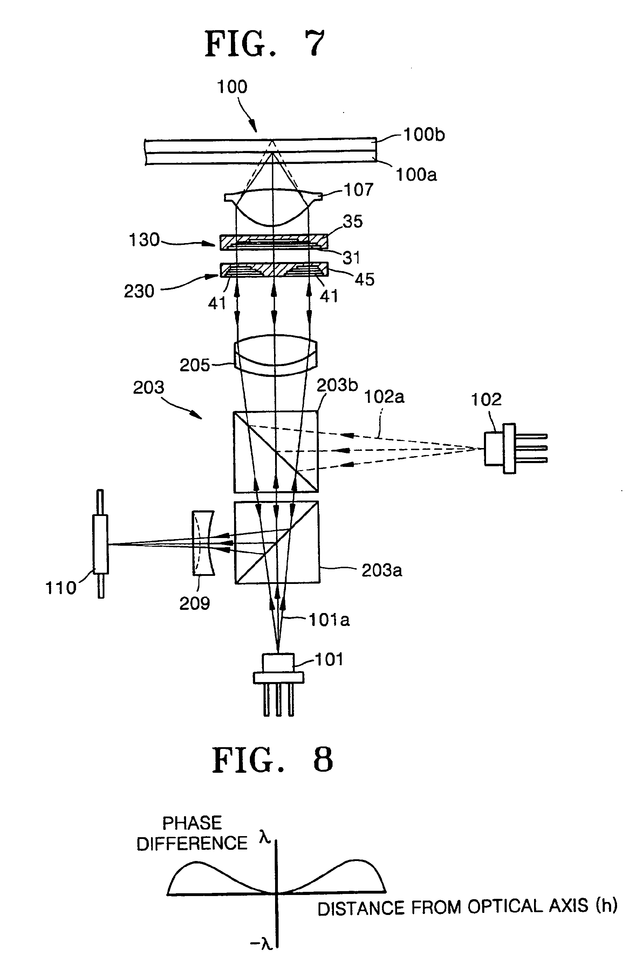

An embodiment of the optical pickup adopting an aberration correction element according to the present invention is shown in Figure 7. Comparing with the optical pickup of Figure 6, the optical pickup of Figure 7 further includes a second light source 102 for emitting a second light beam 102 having a relatively long wavelength suitable for a low-density recording medium 100b; and an optical path changing means 203 arranged to be suitable for both the two light sources 101 and 102. The optical pickup of Figure 7 is designed to be compatible for the high-density recording medium 100a, and the low-density recording medium 100b whose density is relatively lower than that of the high-density recording medium 100a. Alternatively, the objective lens 107 and the photodetector 110 can be designed to be suitable for both the first light beam 101a and the second light beam 102a. In Figure 7, the same elements as those of Figure 5 are designated by the same reference numerals as those used in Figure 5.

The low-density recording medium 100b is a DVD family recording medium, and the substrate thickness of the low-density recording medium 100b is about 0.6 mm. The substrate thickness of the high-density recording medium 100a under development is expected to be 0.6 mm or less.

Like the first light source 101, a semiconductor laser may be adopted as the second light source 102. The second light source 102 is arranged such that the major polarization direction of the second light beam 102a having, for example, a wavelength of about 650 nm, is perpendicular to the major polarization direction of the first light beam 101a emitted from the first light source 101, so that the variation of wavefront for the second light beam 102a is not caused by the first aberration correction element 130. Semiconductor lasers emit a polarized light beam. Accordingly, when a semiconductor laser is adopted as the first and second light sources 101 and 102, the first and second light sources 101 and 102 are arranged such that the major polarization directions of polarized light beams, i.e., the first and second light beams 101a and 102a, are perpendicular to each other.

To just pass the second light beam 102a without changing the shape of the wavefront, the first aberration correction element 130 is designed such that the first and second retardation members 31 and 35 have the same refractive index for the second light beam 102a, for example, as s-polarized light beam. To achieve this, the first and second retardation members 31 and 35 are formed of the same anisotropic material, and the optic axis of each of the first and second retardation members 31 and 35 are arranged such that their refractive indices are different for the first light beam 101a, but the same for the second light beam 102a. The first aberration correction element 130 changes the shape of wavefront for the first light beam 101a if there is a wavelength variation, but not for the second light beam 102a.

The optical path changing means 203 is disposed on the optical path between the first and second light sources 101 and 102, and the objective lens 107, and alters the optical paths of the first and second light beams 101a and 102a from the first and second light sources 101 and 102, respectively.

In the embodiment shown in Figure 7, as the optical path changing means 203 which allows the first and second light sources 101 and 102 to be aligned with the optical axis, first and second beam splitters 203a and 203b for transmitting or reflecting the first and second light beams 101a and 102a from the first and second light sources 101 and 102, respectively, to direct the first and second light beams 101a and 102a toward the optical recording medium 100. In particular, the first beam splitter 203a transmits a portion of the first light beam 101a from the first light source 101 such that it heads toward the recording medium 100. The second beam splitter 203b reflects a portion of the second light beam 102a from the second light source 102 such that it heads toward the recording medium 100. In this case, after having been reflected from the recording medium 100, both the first and second light beams 101a and 102a pass through the second beam splitter 203b and are reflected by the first beam splitter 203a, so that they head toward the photodetector 110. Although a cubic beam splitter is adopted as the first and second beam splitters 203a and 203b in Figure 7, it will be appreciated that a plate or prism type beam splitter can be used as the first and second beam splitters 203a and 203b.

On the other hand, since the objective lens 107 is optimized for the first light beam 101a, for example, having a wavelength of 405 nm, chromatic aberration caused by a wavelength variation and/or spherical aberration caused by the different in thickness between the high-density recording medium 100a and low-density recording medium 100b, as illustrated in Figure 8, occur when the second light beam 102a is emitted to record information on or reproduce from the low-density recording medium 100b.

The optical pickup further includes a second aberration correction element 230 on the optical path between the optical path changing means 203 and the objective lens 107, for correcting the chromatic aberration and/or spherical aberration caused when the second light beam 102a is emitted.

It is preferable that the second aberration correction element 230 is designed such that it just passes the first light beam 101a without causing any wavefront variation, and causes a phase difference for the second light beam 102a such that the outgoing wavefront from the second aberration correction element 230 has the inversed shape of the chromatic aberration and/or spherical aberration, thereby canceling the aberrations.

As the second aberration correction element 230, the aberration correction element having at least two stepped patterns shown in Figure 3 can be adopted. In particular, the second aberration correction element 230 includes the pair of the third retardation members 41 and the fourth retardation member 45 fitted to the third retardation member 41. It is preferable that the third and fourth retardation members 41 and 45 are formed of the same anisotropic material, and are designed such that the third and fourth retardation members 41 and 45 have different refractive indices for the second light beam 102a, for example, as s-polarized light beam, and have the same refractive index for the first light beam 101a, for example, as p-polarized light beam. In addition, in order to shape the wavefront for the second light beam 102a into the inversed shape of the aberration, under the assumption that $n20a$ and $n20b$ are the refractive indices of the third and fourth retardation members 41 and 45, respectively, for the second light beam 102 having a wavelength of 650 nm, the second aberration correction element 230 is designed such that the pitch $d2$ in the optical axis's direction of each step of the third and fourth retardation members 41 and 45 is not an integer multiple of $650nm/(n20a-n20b)$.

For example, when the chromatic aberration and/or spherical aberration, as shown in Figure 8, occur with respect to the second light beam 102a, the third and fourth retardation members 41 and 45 of the second aberration correction element 230 are formed of the same negative type anisotropic material, so that the wavefront of the incoming light beam can be changed into the inversed shape of the chromatic aberration and/or spherical aberration, thereby correcting the aberrations. Alternatively, if the third and fourth retardation members 41 and 45 are formed of the same positive type anisotropic material, the relative locations of the third and fourth retardation members 41 and 45 are changed to cancel the aberrations.

Alternatively, the second aberration correction element 230 can be modified into a configuration corresponding to the aberration correction element shown in Figure 4.

In other words, use of the second aberration correction element 230 in an optical pickup adopting the objective lens 107 optimized for the first light beam 101a, for example, blue light, can correct chromatic aberration incurred by the objective lens 107 when the second light beam 102a, for example, red light, is condensed by the objective lens 107, and/or spherical aberration caused by the difference in thickness between the high-density recording medium 100a and the low-density recording medium 100b. If the high-density recording medium 100a and the low-density recording medium 100b have the same thickness, it is enough to design the second aberration correction element 230 such that it can correct the chromatic aberration incurred by the objective lens 107 with respect to the second light beam 102a.

In the present embodiment shown in Figure 7, a collimating lens 205 may be a combination of negative power and positive power lenses, such that the collimating lens 205 can correct chromatic aberration caused by a relatively large wavelength difference between the first and second light sources 101a and 102a, and can collimate the first and second light beams 101a and 102a. The collimating lens 205 is arranged, for example, before the first and/or the second aberration correction elements 130 and 230, such that the first and/or the second aberration correction elements 130 and 230 can receive parallel light beams.

It is preferable that a sensing lens 209 is constructed to allow the photodetector 110 to detect better quality signals. In other word, the sensing lens 209 may be provided to correct chromatic aberration caused by a relatively large wavelength difference between the first and second light beams 101a and 102a passed through the first and second aberration correction elements 103 and 230 after having been reflected by the recording medium 100.

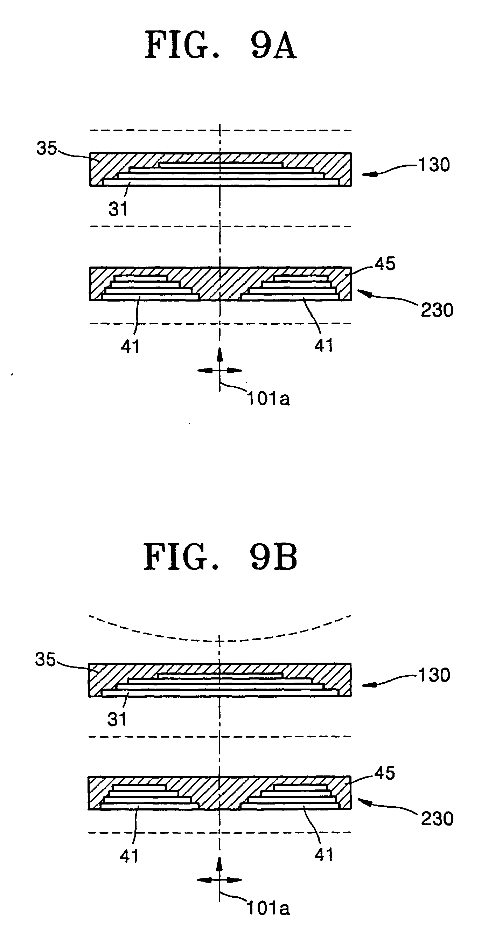

When the first and second aberration correction elements 130 and 230 are adopted in an optical pickup, as described with reference to Figures 5 and 7, the first and second aberration correction elements 130 and 230 can correct aberrations by changing the planar-wavefront of incoming light beam according to the operation mode, i.e., record/reproducing mode, and the type of recording medium adopted, as illustrated in Figures 9A through 9C. In Figures 9A through 9C, the first and second light beams 101a and 102a entering the second aberration correction element 230 are parallel light beams. Here, the objective lens used is optimized for the first light beam 101a, for example, having a wavelength of 405 nm, emitted from the first light source 101 in the reproduction mode for the high-density recording medium 100a.

Referring to Figure 9A, in a reproduction mode for the high-density recording medium 100a, there is no wavefront variation as the first light beam 101a, for example, as a p-polarized light beam, emitted from the first light source 101 passes through the second and first aberration correction elements 230 and 130 in succession.

Referring to Figure 9B, in a record mode for the high-density recording medium 100a, the wavelength of the p-polarized first light beam 101a emitted from the first light source 101 is varied to 406 nm. There is no wavefront variation as the first light beam 101a passes through the second aberration correction element 230. However, the shape of the wavefront is changed by the first aberration correction element 103 due to the wavelength variation. The shape of the first light beam 101a from the first aberration correction element 130 is the inversed shape of the aberration illustrated in Figure 6b. As a result, chromatic aberration caused in the record mode for the high-density recording medium 100a can be corrected.

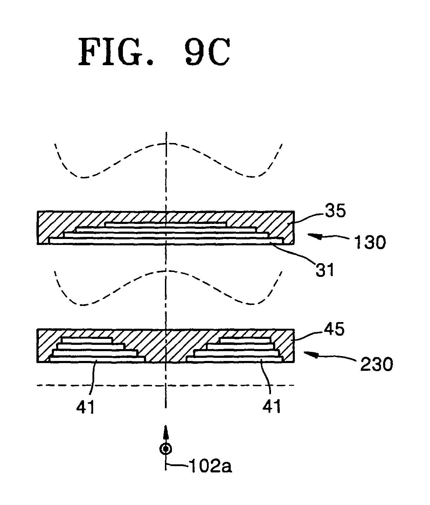

Referring to Figure 9C, when the low-density recording medium 100b is adopted, the second light beam 102a, for example, as a 650 nm s-polarized light beam, is emitted from the second light source 102 in record and reproduction modes. As the second light beam 102a passes through the second aberration correction element 230, the wavefront of the second light beam 102a changes into the inversed shape of the chromatic aberration incurred by the objective lens with respect to the second light beam 102a, and/or spherical aberration caused by the difference in thickness between the high-density recording medium 100a and the low-density recording medium 100b. As the second light beam 102a passes through the first aberration correction element 130, the shape of the incoming light beam does not change. The wavefront of the second light beam 102a from the first and second aberration correction elements 130 and 230 has the inversed shape of the aberrations incurred, as shown in Figure 8. As described above, aberrations occurring when information is recorded on or reproduced from the low-density recording medium 100b by an optical pickup optimized for a high-density recording medium, as illustrated in Figure 8, can be corrected.

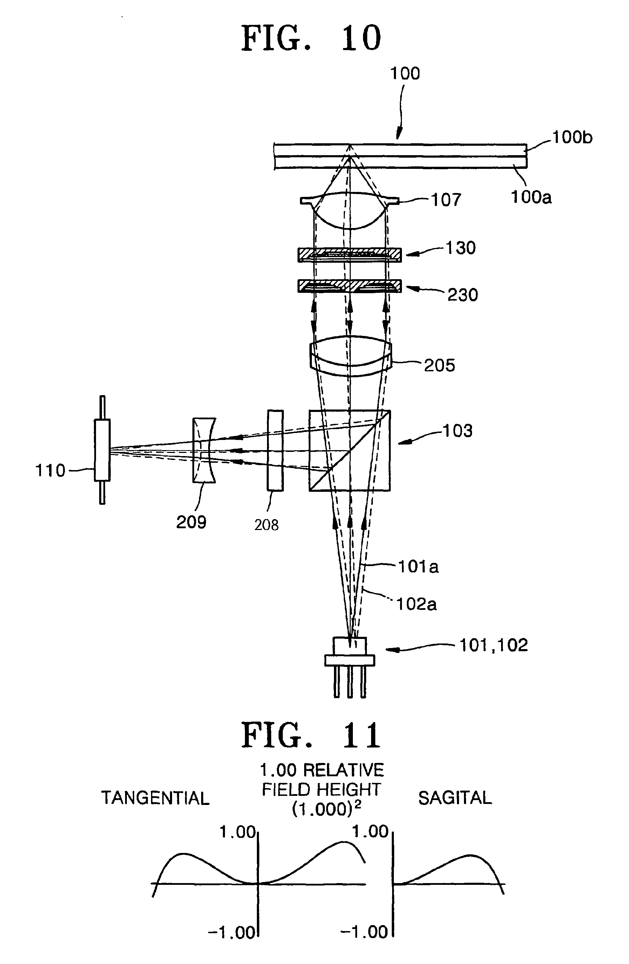

Figure 10 illustrates the optical arrangement of another embodiment of the optical pickup adopting aberration correction elements according to the present invention. The optical pickup of Figure 10 is characterized in that the second light source 102 is arranged close to the first light source 101. The same elements as those illustrated in Figures 5 and 7 are designated by the same reference numerals as those used in Figures 5 and 7.

Referring to Figure 10, the first light source 101 is aligned with the optical axis, and the second light source 102 is arranged near to the first light source 101, so that the second light beam 102a emitted from the second light source 102 is slightly tilted with respect to the optical axis. For this reason, when the second light beam 102a is emitted to record information on and reproduce information from the low-density recording medium, a field aberration as well as the chromatic and/or spherical aberrations described previously occur. The field aberration caused by the tilting is illustrated in Figure 11.

When the first and second light sources 101 and 102 are arranged as shown in Figure 10, it is preferable that the second aberration correction element 230 is designed such that it can correct the field aberration caused by tilting of the second light beam 102a.

On the other hand, when the second light beam 102a heads toward the photodetector 110 through the first and second aberration correction elements 130 and 230 after having been reflected from the low-density recording medium 100b, the second light beam 102a still includes the field aberration. For this reason, it is preferable that a hologram element 208 is further disposed on the optical path between the optical path changing means 103 and the photodetector 110 to eliminate the field aberration.

Alternatively, the second light source 102, rather than the first light source 101, can be aligned with the optical axis, and then the first light source 101 can be arranged near to the second light source 102. In this case, the first aberration correction element 130 is designed such that it can correct the field aberration caused by tilting of the first light beam 101a. The hologram element 308 is provided to eliminate the field aberration from the first light beam 101a.

For the aberration correction described with reference to Figures 7 through 10, the first aberration correction element 130 is arranged close to the objective lens 107. Although the second aberration correction element 230 is arranged close to the objective lens 107, the shape of the resulting wavefront is the same as in the previous embodiments.

As previously mentioned, the aberration correction elements according to the present invention correct aberrations by selectively varying a phase difference of an incoming light beam according to the polarization of the incoming light beam. Accordingly, light efficiency is very high.

In particular, when the aberration correction element is designed such that a phase difference caused by the aberration correction element with respect to a wavelength variation of an incident light beam increases or decreases with increasing distance from the optical axis, and then adopted in an optical pickup for high-density recording and reproduction with a shorter wavelength light beam, chromatic aberration caused by a slight wavelength variation between record and reproduction modes can be corrected with high optical efficiency.

The aberration correction element according to the present invention selectively causes a phase difference of incoming light beam according to the polarization of the incoming light, and thus it can be adopted in an optical pickup compatible for high-density and low-density recording media using two polarized light beams perpendicular to each other.

While this invention has been particularly shown and described with reference to preferred embodiments thereof, it will be understood by those skilled in the art that various changes in form and details may be made thereto without departing from the scope of the invention as defined by the appended claims.

**Claims**

1. An optical pickup comprising:

   a first light source (101) that emits a first light beam as a first polarised beam having a relatively short wavelength suitable for a high-density recording medium;
   a second light source (102) that emits a second light beam as a second polarised beam having a relatively long wavelength suitable for a low-density recording medium;
   an objective lens (107) for focussing the light beams to form a reflective light spot on a recording medium (100);
   at least one optical path changing means (103,203) arranged on the optical path between the objective lens and respective first and second light sources, for altering the travelling path of the light beam from the light sources; and
   a photo detector (110) for receiving the light beam through the objective lens and the optical path changing means after having been reflected from the recording medium; wherein the optical pickup further comprises:
   a first aberration correction element (130) for correcting chromatic aberration caused by a wavelength variation of the first light beam, the first aberration correction element (130) being arranged on the optical path between the at least one optical path changing means (103, 203) and the objective lens; and
   a second aberration correction member (230) arranged on the optical path between the at least one optical path changing means (103, 203) and the objective lens (107), for selectively causing a phase difference of the second light beam so that chromatic aberration caused by a wavelength variation with respect to the second light beam and/or spherical aberration caused by a substrate thickness variation with respect to the low-density recording medium are corrected; wherein
   the polarisation of the first and second light beams are perpendicular;
   the first aberration correction member comprises first and second retardation members and the second aberration correct member comprise third and fourth retardation member;
   the first retardation member (31) having a stepped convex pattern with a plurality of steps at one side; and
   the second retardation member (35) combines with the first retardation member, the second retardation member having a stepped concave pattern with a plurality of steps at one side facing the first retardation member, the stepped concave pattern being fitted to the stepped convex pattern of the first retardation member (31), and wherein the refractive indices of the first and second retardation members (31,35) are different for a first polarized light beam, such that the first and second retardation members selectively cause a phase difference of an incident light beam according to the polarization of incident light beam and wherein the refractive indices of the first and second retardation members (31, 35) are substantially the same for a second polarised light beam perpendicular to the first polarised light beam;

the third retardation member (41) has at least two stepped convex patterns each of which has a plurality of steps; the fourth retardation member (45) has at least two stepped concave patterns corresponding to the stepped convex patterns, so that chromatic aberration caused by a wavelength variation with respect to the second light beam and/or spherical aberration caused by a substrate thickness variation with respect to the low-density recording medium are corrected.

2. The optical pickup of claim 1, wherein the pitch in the optical axis's direction of each of the plurality of steps for the first and second retardation members (31,35) is an integer multiple of $\lambda 0/(n0a-n0b)$, where $\lambda 0$ is the wavelength of the first polarized light beam for which an objective lens is designed, and $n0a$ and $n0b$ are the refractive indices of the first and second retardation members, respectively, for the wavelength $\lambda 0$.

3. The optical pickup of claim 1 or 2, wherein the first and second retardation members (31,35) are formed of an anisotropic material.

4. The optical pickup of any of claims 1 through 3, wherein when a phase difference caused by the first and second retardation members (31,35) with respect to a wavelength variation of the first polarized light beam from $\lambda 0$ to $\lambda 1$ is expressed as $((n1a-n1b)\cdot z(h))$, where $n1a$ and $n1b$ are the refractive indices of the first and second retardation members for the wavelength $\lambda 1,$ and $h$ is a distance from the optical axis, and $z(h)$ is the height from the light receiving to a particular step of the first or second retardation member at the distance $h,$ the phase difference is opposite to the wavelength variation.

5. The optical pickup of claim 4, wherein the stepped convex pattern of the first retardation member (31), and the stepped concave pattern of the second retardation member (35) are all concentric around the optical axis, and the phase difference caused by the first and second retardation members with respect to the light beam having the wavelength $\lambda 1$ increases or decreases with increasing distance from the optical axis.

6. The optical pickup of claim 1, wherein the stepped convex pattern of the first retardation member includes a plurality of steps being concentric around the optical axis, and the first aberration correction member is designed such that a phase difference caused by the first and second retardation members increases or decrease with increasing distance from the optical axis.

7. The optical pickup of claim 6, wherein the pitch in the optical axis's direction of each of the plurality of steps for the first and second retardation members (31,35) is an integer multiple of $\lambda 0/ (n0a-n0b)$, where $\lambda 0$ is the wavelength of the first polarized light beam for which the objective lens is designed, and n0a and $n0b$ are the refractive indices of the first and second retardation members, respectively, for the wavelength $\lambda 0$.

8. The optical pickup of claim 6 or 7, wherein when a phase difference caused by the first and second retardation members (31,35) with respect to a wavelength $\lambda 1$ varied from the wavelength $\lambda 0$ of the first light beam is expressed as $((n1a-n1b)\cdot z(h))$, where n1a and $n1b$ are the refractive indices of the first and second retardation members for the wavelength $\lambda 1,$ and $h$ is a distance from the optical axis, and $z(h)$ is the height from the light receiving surface to a particular step of the first or second retardation member at the distance h, the phase difference is opposite to the aberration caused by the wavelength variation.

9. The optical pickup of claim 1, wherein the pitch in the optical axis's direction of each of the plurality of steps for the third and fourth retardation members (41, 45) is not an integer multiple of $\lambda 0'(n0a'-n0b')$, where A0' is the wavelength of the second polarized light beam, and $n0a'$ and $n0b'$ are the refractive indices of the first and second retardation members, respectively, for the wavelength $\lambda 0'$.

10. The optical pickup of claim 1 or 9, wherein when a phase difference caused by the third and fourth retardation members (44,45) with respect to a wavelength $\lambda 1'$ varied from the wavelength $\lambda 0'$ of the second polarized light beam is expressed as $((n1a'-n1b')\cdot z(h))$, where $n1a'$ and $n1b'$ are the refractive indices of the third and fourth retardation members for the second light beam having the wavelength $\lambda 1,$ and $h$ is a distance from the optical axis, and $z(h)$ is the height from the light receiving surface to a particular step of the third or fourth retardation member at the distance *h*, the phase difference is opposite to the aberration caused by the wavelength variation.

11. The optical pickup of any preceding claim, wherein the first and second retardation members (31,35), and/or the third and fourth retardation members (41,45) are formed of an anisotropic material.

12. The optical pickup of claim 11, wherein the first and second retardation members (31,35) and/or the third and fourth retardation members (41,45) have substantially the same refractive index for the second light beam as a second polarized beam perpendicular to the first polarization of the first light beam, and/or for the first light beam as the first polarized beam perpendicular to the second polarization of the second light beam.

13. The optical pickup of any preceding claim, wherein the first light beam (101a) is blue light and/or the second light beam (102a) is red light; and the high-density recording medium (100) is a recording medium having a higher density than digital versatile disc (DVD) family media, and/or the low-density recording medium is a DVD family recording medium.

14. The optical pickup of claim 13, wherein the first light beam has a wavelength of about 405 nm, and/or the second light beam has a wavelength of about 650 nm.

15. The optical pickup of claim 13 or 14, wherein the thickness of substrate of the high-density recording medium is 0.6 mm or less, and/or the thickness of substrate of the low-density recording medium is about 0,6 mm.

16. The optical pickup of claim 1, wherein the optical path changing means (203) is constructed such that the first light source (101) and the second light source (102) are perpendicular to each other, and both the first and second light sources (101,102) are aligned with the optical axis.

17. The optical pickup of claim 1, wherein the first and second light sources are arranged close to each other.

18. The optical pickup of any of claims 1-15 or 17, wherein one of the first and second light sources (101,102) is aligned with the optical axis, and the other is off the optical axis near to the one light source, and the first or second aberration correction element (130,230) is designed such that a field aberration with respect to the light beam emitted from the other light source due to the arrangement of the other light source is corrected.

19. The optical pickup of claim 18, further comprising a hologram element (208) on the optical path between the optical path changing means (103) and the photodetector (110), for correcting a field aberration with respect to the light beam heading toward the photodetector through the first and/or the second aberration correction elements (130,230) after having been emitted from the other light source and reflected from a corresponding recording medium.

**Patentansprüche**

1. Optisches Abtastgerät, umfassend:

eine erste Lichtquelle (101), die einen ersten Lichtstrahl als ersten polarisierten Strahl mit einer relativ kurzen Wellenlänge geeignet für ein hochdichtes Aufzeichnungsmedium abgibt;
eine zweite Lichtquelle (102), die einen zweiten Lichtstrahl als zweiten polarisierten Strahl mit einer relativ langen Wellenlänge geeignet für ein niedrigdichtes Aufzeichnungsmedium abgibt;
eine Objektivlinse (107) zum Fokussieren der Lichtstrahlen zu einem reflektiven Lichtfleck auf einem Aufzeichnungsmedium (100);
mindestens ein auf dem Lichtweg zwischen der Objektivlinse und der jeweiligen ersten und zweiten Lichtquelle angeordnetes Lichtwegwechselmittel (103, 203), zum Ändern des Laufwegs des Lichtstrahls von der Lichtquelle; und
einen Photodetektor (110) zum Empfangen des Lichtstrahls durch die Objektivlinse und das Lichtwegwechselmittel, nachdem er von dem Aufzeichnungsmedium reflektiert wurde; wobei das optische Abtastgerät ferner umfasst:

ein erstes Aberrationskorrekturelement (130) zum Korrigieren einer von einer Wellenlängenvariation des ersten Lichtstrahls verursachten chromatischen Aberration, wobei das erste Aberrationskorrekturelement (130) auf dem Lichtweg zwischen dem mindestens einen Lichtwegwechselmittel (103, 203) und der Objektivlinse angeordnet ist; und

ein zweites Aberrationskorrekturelement (230), das auf dem Lichtweg zwischen dem mindestens einen Lichtwegwechselmittel (103, 203) und der Objektivlinse (107) angeordnet ist, zum selektiven Herbeibringen einer Phasendifferenz des zweiten Lichtstrahls, so dass die von einer Wellenlängenvariation mit Bezug auf den zweiten Lichtstrahl verursachte chromatische Aberration und/oder die durch eine Substratdickenvariation mit Bezug auf das niedrigdichte Aufzeichnungsmedium verursachte sphärische Aberration korrigiert werden; wobei

die Polarisation des ersten und zweiten Lichtstrahls senkrecht ist;

das erste Aberrationskorrekturglied ein erstes und zweites Verzögerungsglied und das zweite Aberrationskorrekturglied ein drittes und viertes Verzögerungsglied umfasst;

wobei das erste Verzögerungsglied (31) ein gestuftes konvexes Muster mit mehreren Stufen an einer Seite hat; und

sich das zweite Verzögerungsglied (35) mit dem ersten Verzögerungsglied vereint, wobei das zweite Verzögerungsglied ein gestuftes konkaves Muster mit mehreren Stufen an einer dem ersten Verzögerungsglied zugewandten Seite hat, wobei das gestufte konkave Muster an das gestufte konvexe Muster des ersten Verzögerungsglieds (31) angepasst wird, und

wobei die Brechungsindices des ersten und zweiten Verzögerungsglieds (31, 35) für einen ersten polarisierten Lichtstrahl unterschiedlich sind, so dass das erste und zweite Verzögerungsglied selektiv eine Phasendifferenz eines einfallenden Lichtstrahls gemäß der Polarisation des einfallenden Lichtstrahls herbeiführen und wobei die Brechungsindices des ersten und zweiten Verzögerungsglieds (31, 35) im Wesentlichen für einen zweiten polarisierten Lichtstrahl, der senkrecht zum ersten polarisierten Lichtstrahl ist, gleich sind;

das dritte Verzögerungsglied (41) mindestens zwei gestufte konvexe Muster hat, von denen jedes mehrere Stufen hat;

das vierte Verzögerungsglied (45) mindestens zwei gestufte konkave Muster hat, die den gestuften konvexen Mustern entsprechen, so dass die von einer Wellenlängenvariation mit Bezug auf den zweiten Lichtstrahl verursachte chromatische Aberration und/oder die durch eine Substratdickenvariation mit Bezug auf das niedrigdichte Aufzeichnungsmedium verursachte sphärische Aberration korrigiert werden.

2. Optisches Abtastgerät nach Anspruch 1, wobei die Teilung in der Richtung der optischen Achse jeder der mehreren Stufen für das erste und zweite Verzögerungsglied (31, 35) ein ganzzahliges Vielfaches von $\lambda 0/(n0a-n0b)$ ist, wo $\lambda 0$ die Wellenlänge des ersten polarisierten Lichtstrahls, für den eine Objektivlinse ausgebildet ist, und $n0a$ und $n0b$ die Brechungsindizes des ersten bzw. zweiten Verzögerungsglieds für die Wellenlänge $\lambda 0$ sind.

3. Optisches Abtastgerät nach Anspruch 1 oder 2, wobei das erste und zweite Verzögerungsglied (31, 35) aus einem anisotropischen Material gebildet sind.

4. Optisches Abtastgerät nach einem der Ansprüche 1 bis 3, wobei die Phasendifferenz, wenn eine von dem ersten und zweiten Verzögerungsglied (31, 35) verursachte Phasendifferenz mit Bezug auf eine Wellenlängenvariation des ersten polarisierten Lichtstrahls von $\lambda 0$ bis $\lambda 1$ als $(n1a-n1b) \cdot z(h)$) ausgedrückt ist, wo $n1a$ und $n1b$ die Brechungsindices des ersten und zweiten Verzögerungsglieds für die Wellenlänge $\lambda 1$ sind, und $h$ ein Abstand von der optischen Achse ist, und $z(h)$ die Höhe von der lichtempfangenden Fläche zu einer besonderen Stufe des ersten oder zweiten Verzögerungsglieds mit dem Abstand $h$ ist, das Gegenteil der Wellenlängenvariation ist.

5. Optisches Abtastgerät nach Anspruch 4, wobei das gestufte konvexe Muster des ersten Verzögerungsglieds (31) und das gestufte konkave Muster des zweiten Verzögerungsglieds (35) insgesamt um die optische Achse konzentrisch sind, und sich die von dem ersten und zweiten Verzögerungsglied verursachte Phasendifferenz mit Bezug auf den Lichtstrahl mit der Wellenlänge $\lambda 1$ mit steigendem Abstand von der optischen Achse vergrößert oder verkleinert.

6. Optisches Abtastgerät nach Anspruch 1, wobei das gestufte konvexe Muster des ersten Verzögerungsglieds mehrere konzentrisch um die optische Achse liegende Stufen enthält und das erste Aberrationskorrekturglied derart ausgebildet ist, dass sich eine von dem ersten und zweiten Verzögerungsglied verursachte Phasendifferenz mit steigendem Abstand von der optischen Achse vergrößert oder verkleinert.

7. Optisches Abtastgerät nach Anspruch 6, wobei die Teilung in der Richtung der optischen Achse jeder der mehreren Stufen für das erste und zweite Verzögerungsglied (31, 35) ein ganzzahliges Vielfaches von $\lambda 0/(n0a-n0b)$ ist, wo

$\lambda 0$ die Wellenlänge des ersten polarisierten Lichtstrahls, für den eine Objektivlinse ausgebildet ist, und $n0a$ und $n0b$ die Brechungsindizes des ersten bzw. zweiten Verzögerungsglieds für die Wellenlänge $\lambda 0$ sind.

8. Optisches Abtastgerät nach Anspruch 6 oder 7, wobei die Phasendifferenz, wenn eine von dem ersten und zweiten Verzögerungsglied (31, 35) verursachte Phasendifferenz mit Bezug auf eine von der Wellenlänge $\lambda 0$ des ersten Lichtstrahls variierte Wellenlänge $\lambda 1$ als $((n1a-n1b)\cdot z(h))$ ausgedrückt ist, wo $n1a$ und $n1b$ die Brechungsindices des ersten und zweiten Verzögerungsglieds für die Wellenlänge $\lambda 1$ sind, und h ein Abstand von der optischen Achse ist, und $z(h)$ die Höhe von der lichtempfangenden Fläche zu einer besonderen Stufe des ersten oder zweiten Verzögerungsglieds mit dem Abstand $h$ ist, das Gegenteil der von der Wellenlängenvariation verursachten Aberration ist.

9. Optisches Abtastgerät nach Anspruch 1, wobei die Teilung in der Richtung der optischen Achse jeder der mehreren Stufen für das dritte und vierte Verzögerungsglied (41, 45) kein ganzzahliges Vielfaches von $\lambda 0'/(n0a'-n0b')$ ist, wo $\lambda 0'$ die Wellenlänge des zweiten polarisierten Lichtstrahls und $n0a'$ und $n0b'$ die Brechungsindizes des dritten bzw. vierten Verzögerungsglieds für die Wellenlänge $\lambda 0'$ sind.

10. Optisches Abtastgerät nach Anspruch 1 oder 9, wobei die Phasendifferenz, wenn eine von dem dritten und vierten Verzögerungsglied (44, 45) verursachte Phasendifferenz mit Bezug auf eine von der Wellenlänge $\lambda 0'$ des zweiten Lichtstrahls variierte Wellenlänge $\lambda 1'$ als $((n1a'-n1b')\cdot z(h))$ ausgedrückt ist, wo $n1a'$ und $n1b'$ die Brechungsindices des dritten und vierten Verzögerungsglieds für den zweiten Lichtstrahl mit der Wellenlänge $\lambda 1'$ sind, und $h$ ein Abstand von der optischen Achse ist, und $z(h)$ die Höhe von der lichtempfangenden Fläche zu einer besonderen Stufe des dritten oder vierten Verzögerungsglieds mit dem Abstand $h$ ist, das Gegenteil der von der Wellenlängenvariation verursachten Aberration ist.

11. Optisches Abtastgerät nach einem der vorhergehenden Ansprüche, wobei das erste und zweite Verzögerungsglied (31, 35) und/oder das dritte und vierte Verzögerungsglied (41, 45) aus einem anisotropischen Material gebildet sind.

12. Optisches Abtastgerät nach Anspruch 11, wobei das erste und zweite Verzögerungsglied (31, 35) und/oder das dritte und vierte Verzögerungsglied (41, 45) im Wesentlichen den gleichen Brechungsindex für den zweiten Lichtstrahl als ein zweiter polarisierter Strahl, der senkrecht zu der ersten Polarisation des ersten Lichtstrahls ist, und/oder für den ersten Lichtstrahl als der erste polarisierte Strahl, der senkrecht zu der zweiten Polarisation des zweiten Lichtstrahls ist, haben.

13. Optisches Abtastgerät nach einem der vorhergehenden Ansprüche, wobei der erste Lichtstrahl (101a) Blaulicht und/oder der zweite Lichtstrahl (102a) Rotlicht ist; und das hochdichte Aufzeichnungsmedium (100) ein Aufzeichnungsmedium mit einer höheren Dichte als die Medien der Digital-Versatile-Disk-Familie (DVD-Familie) und/oder das niedrigdichte Aufzeichnungsmedium ein Aufzeichnungsmedium der DVD-Familie ist.

14. Optisches Abtastgerät nach Anspruch 13, wobei der erste Lichtstrahl eine Wellenlänge von ungefähr 405 nm und/oder der zweite Lichtstrahl eine Wellenlänge von ungefähr 650 nm aufweist.

15. Optisches Abtastgerät nach Anspruch 13 oder 14, wobei die Dicke des Substrats des hochdichten Aufzeichnungsmediums 0,6 mm oder weniger und/oder die Dicke des Substrats des niedrigdichten Aufzeichnungsmediums ungefähr 0,6 mm beträgt.

16. Optisches Abtastgerät nach Anspruch 1, wobei das Lichtwegwechselmittel (203) so aufgebaut ist, dass die erste Lichtquelle (101) und die zweite Lichtquelle (102) senkrecht zueinander liegen und sowohl die erste als auch die zweite Lichtquelle (101, 102) mit der optischen Achse ausgerichtet sind.

17. Optisches Abtastgerät nach Anspruch 1, wobei die erste und zweite Lichtquelle nahe beieinander angeordnet sind.

18. Optisches Abtastgerät nach einem der Ansprüche 1-15 oder 17, wobei die erste oder zweite Lichtquelle (101, 102) mit der optischen Achse ausgerichtet ist und die andere in der Nähe der einen Lichtquelle von der optischen Achse abgelegen ist, und das erste oder zweite Aberrationskorrekturelement (130, 230) so ausgelegt ist, dass eine Feldaberration mit Bezug auf den von der anderen Lichtquelle abgegebenen Lichtstrahl auf Grund der Anordnung der anderen Lichtquelle korrigiert wird.

19. Optisches Abtastgerät nach Anspruch 18, ferner umfassend ein Hologrammelement (208) auf dem Lichtweg zwischen dem Lichtwegwechselmittel (103) und dem Photodetektor (110) zur Korrektur einer Feldaberration mit Bezug auf den Lichtstrahl, der in Richtung des Photodetektors durch das erste und/oder das zweite Aberrationskorrekturelement (130, 230) läuft, nachdem er von der anderen Lichtquelle abgegeben und von einem entsprechenden Aufzeichnungsmedium reflektiert wurde.

**Revendications**

1. Dispositif optique de lecture, comprenant :

une première source de lumière (101) qui émet un premier faisceau de lumière comme premier faisceau polarisé ayant une longueur d'onde relativement courte convenant à un support d'enregistrement de haute densité ;
une seconde source de lumière (102) qui émet un second faisceau de lumière comme second faisceau polarisé ayant une longueur d'onde relativement longue convenant à un support d'enregistrement de faible densité ;
une lentille d'objectif (107) pour focaliser les faisceaux de lumière afin de former un point lumineux réfléchissant sur un support d'enregistrement (100) ;
au moins un moyen de changement de trajet optique (103, 203) agencé sur le trajet optique entre la lentille d'objectif et les première et seconde sources de lumière respectives, pour modifier le trajet de déplacement du faisceau de lumière provenant des sources de lumière ; et
un photo-détecteur (110) pour recevoir le faisceau de lumière à travers la lentille d'objectif et le moyen de changement de trajet optique après qu'il a été réfléchi par le support d'enregistrement ; dans lequel le dispositif optique de lecture comprend en outre :

un premier élément de correction d'aberration (130) pour corriger l'aberration chromatique causée par une variation de longueur d'onde du premier faisceau de lumière, le premier élément de correction d'aberration (130) étant agencé sur le trajet optique entre l'au moins un moyen de changement de trajet optique (103, 203) et la lentille d'objectif ; et
un second élément de correction d'aberration (230) agencé sur le trajet optique entre l'au moins un moyen de changement de trajet optique (103, 203) et la lentille d'objectif (107), pour entraîner sélectivement une différence de phase du second faisceau de lumière de telle sorte que l'aberration chromatique causée par une variation de longueur d'onde relativement au second faisceau de lumière et/ou l'aberration sphérique causée par une variation d'épaisseur de substrat relativement au support d'enregistrement de faible densité soient corrigées ; dans lequel

les polarisations des premier et second faisceaux de lumière soient perpendiculaires ;
le premier élément de correction d'aberration comprend des premier et second éléments de retard et le second élément de correction d'aberration comprend des troisième et quatrième éléments de retard ;
le premier élément de retard (31) ayant une configuration convexe en gradins avec une pluralité de gradins d'un côté ; et
le second élément de retard (35) se combine au premier élément de retard, le second élément de retard ayant une configuration concave en gradins avec une pluralité de gradins d'un côté faisant face au premier élément de retard, la configuration concave en gradins étant adaptée à la configuration convexe en gradins du premier élément de retard (31), et
dans lequel les indices de réfraction des premier et second élément de retard (31, 35) sont différents pour un premier faisceau de lumière polarisé, de telle sorte que les premier et second éléments de retard entraînent sélectivement une différence de phase d'un faisceau de lumière incident en fonction de la polarisation du faisceau de lumière incident et dans lequel les indices de réfraction des premier et second éléments de retard (31, 35) sont sensiblement identiques pour un second faisceau de lumière polarisé perpendiculaire au premier faisceau de lumière polarisé,
le troisième élément de retard (41) a au moins deux configurations convexes en gradins ayant chacune une pluralité de gradins ;
le quatrième élément de retard (45) a au moins deux configurations concaves en gradins correspondant aux configurations convexes en gradins, de telle sorte que l'aberration chromatique causée par une variation de longueur d'onde relativement au second faisceau de lumière et/ou l'aberration chromatique causée par une variation d'épaisseur de substrat relativement au support d'enregistrement de faible densité soient corrigées.

2. Dispositif optique de lecture selon la revendication 1, dans lequel le pas dans le sens de l'axe optique de chacun de la pluralité de gradins des premier et second éléments de retard (31, 35) est un multiple entier de $\lambda_0/(n_{0a}-n_{0b})$,

où $\lambda 0$ est la longueur d'onde du premier faisceau de lumière polarisé pour laquelle une lentille d'objectif a été conçue, et $n0a$ et $n0b$ sont les indices de réfraction des premier et second éléments de retard, respectivement, pour la longueur d'onde $\lambda 0$.

3. Dispositif optique de lecture selon la revendication 1 ou 2, dans lequel les premier et second éléments de retard (31, 35) sont formés en un matériau anisotrope.

4. Dispositif optique de lecture selon l'une quelconque des revendications 1 à 3, dans lequel quand une différence de phase causée par les premier et second éléments de retard (31, 35) relativement à une variation de longueur d'onde du premier faisceau de lumière polarisé de $\lambda 0$ à $\lambda 1$ est exprimée par $((n1an1b).z(h))$, où $n1a$ et $n1b$ sont les indices de réfraction des premier et second éléments de retard pour la longueur d'onde $\lambda 1$, et $h$ est la distance depuis l'axe optique, et $z(h)$ est la hauteur depuis la surface de réception de la lumière jusqu'à un gradin particulier du premier ou second élément de retard à la distance $h$, la différence de phase est opposée à la variation de longueur d'onde.

5. Dispositif optique de lecture selon la revendication 4, dans lequel la configuration convexe en gradins du premier élément de retard (31), et la configuration concave en gradins du second élément de retard (35) sont toutes concentriques autour de l'axe optique, et la différence de phase causée par les premier et second éléments de retard relativement au faisceau de lumière ayant la longueur d'onde $\lambda 1$ augmente ou diminue avec l'accroissement de la distance depuis l'axe optique.

6. Dispositif optique de lecture selon la revendication 1, dans lequel la configuration convexe en gradins du premier élément de retard comporte une pluralité de gradins concentriques autour de l'axe optique, et le premier élément de correction d'aberration est conçu de telle sorte qu'une différence de phase causée par les premier et second éléments de retard augmente ou diminue avec un accroissement de la distance depuis l'axe optique.

7. Dispositif optique de lecture selon la revendication 6, dans lequel le pas dans le sens de l'axe optique de chacun de la pluralité de gradins des premier et second éléments de retard (31, 35) est un multiple entier de $\lambda 0/(n0a-n0b)$, où $\lambda 0$ est la longueur d'onde du premier faisceau de lumière polarisé pour laquelle la lentille d'objectif a été conçue, et $n0a$ et $n0b$ sont les indices de réfraction des premier et second éléments de retard, respectivement, pour la longueur d'onde $\lambda 0$.

8. Dispositif optique de lecture selon la revendication 6 ou 7, dans lequel quand une différence de phase causée par les premier et second éléments de retard (31, 35) relativement à une longueur d'onde $\lambda 1$ ayant variée de la longueur d'onde $\lambda 0$ du premier faisceau de lumière est exprimée par $((n1a-n1b).z(h))$, où $n1a$ et $n1b$ sont les indices de réfraction des premier et second éléments de retard pour la longueur d'onde $\lambda 1$, et $h$ est la distance depuis l'axe optique, et $z(h)$ est la hauteur depuis la surface de réception de la lumière jusqu'à un gradin particulier du premier ou second élément de retard à la distance h, la différence de phase est opposée à l'aberration causée par la variation de longueur d'onde.

9. Dispositif optique de lecture selon la revendication 1, dans lequel le pas dans le sens de l'axe optique de chacun de la pluralité de gradins des troisième et quatrième éléments de retard (41, 45) n'est pas un multiple entier de $\lambda 0'/(n0a'-n0b')$, où $\lambda 0'$ est la longueur d'onde du second faisceau de lumière polarisé, et $n0a'$ et $n0b'$ sont les indices de réfraction des premier et second éléments de retard, respectivement, de la longueur d'onde $\lambda 0'$.

10. Dispositif optique de lecture selon la revendication 1 ou 9, dans lequel quand une différence de phase causée par les troisième et quatrième éléments de retard (44, 45) relativement à une longueur d'onde $\lambda 1'$ ayant variée de la longueur d'onde $\lambda 0'$ du second faisceau de lumière polarisé est exprimée par $((n1a'-n1b').z(h))$, où $n1a'$ et $n1b'$ sont les indices de réfraction des troisième et quatrième éléments de retard pour le second faisceau de lumière de longueur d'onde $\lambda 1'$, et h est une distance depuis l'axe optique, et $z(h)$ est la hauteur depuis la surface de réception de la lumière jusqu'à un gradin particulier du troisième ou quatrième élément de retard à la distance h, la différence de phase est opposée à l'aberration causée par la variation de longueur d'onde.

11. Dispositif optique de lecture selon l'une quelconque des revendications précédentes, dans lequel les premier et second éléments de retard (31, 35), et/ou les troisième et quatrième éléments de retard (41, 45) sont formés en un matériau anisotrope.

12. Dispositif optique de lecture selon la revendication 11, dans lequel les premier et second éléments de retard (31, 35) et/ou les troisième et quatrième éléments de retard (41, 45) ont sensiblement le même indice de réfraction pour le second faisceau de lumière qu'un second faisceau polarisé perpendiculaire à la première polarisation du premier faisceau de lumière, et/ou pour le premier faisceau de lumière que le premier faisceau polarisé perpendiculaire à la seconde polarisation du second faisceau de lumière.

**13.** Dispositif optique de lecture selon l'une quelconque des revendications précédentes, dans lequel le premier faisceau de lumière (101a) est une lumière bleue et/ou le second faisceau de lumière (102a) est une lumière rouge, et le support d'enregistrement de haute densité (100) est un support d'enregistrement ayant une densité supérieure à celle des supports de la famille des disques polyvalents numériques (DVD), et/ou le support d'enregistrement de faible densité est un support d'enregistrement de la famille des DVD.

**14.** Dispositif optique de lecture selon la revendication 13, dans lequel le premier faisceau de lumière a une longueur d'onde d'environ 405 nm, et/ou le second faisceau de lumière a une longueur d'onde d'environ 650 nm.

**15.** Dispositif optique de lecture selon la revendication 13 ou 14, dans lequel l'épaisseur du substrat du support d'enregistrement de haute densité est de 0,6 mm ou moins, et/ou l'épaisseur du substrat du support d'enregistrement de faible densité est d'environ 0,6 mm.

**16.** Dispositif optique de lecture selon la revendication 1, dans lequel le moyen de changement de trajet optique (203) est construit de telle sorte que la première source de lumière (101) et la seconde source de lumière (102) soient perpendiculaires l'une à l'autre, et les deux première et seconde sources de lumière (101, 102) soient alignées avec l'axe optique.

**17.** Dispositif optique de lecture selon la revendication 1, dans lequel les première et seconde sources de lumière sont agencées l'une près de l'autre.

**18.** Dispositif optique de lecture selon l'une quelconque des revendications 1 à 15 ou 17, dans lequel l'une des première et seconde sources de lumière (101, 102) est alignée avec l'axe optique, et l'autre est décalée de l'axe optique près de la première source de lumière, et le premier ou second élément de correction d'aberration (130, 230) est conçu de telle sorte qu'une aberration de champ relativement au faisceau de lumière émis par l'autre source de lumière en raison de l'agencement de l'autre source de lumière soit corrigée.

**19.** Dispositif optique de lecture selon la revendication 18, comprenant également un élément d'hologramme (208) sur le trajet optique entre le moyen de changement de trajet optique (103) et le photo-détecteur (110) pour corriger une aberration de champ relativement à l'orientation du faisceau de lumière vers le photo-détecteur à travers le premier et/ou le second élément de correction d'aberration (130, 230) après avoir été émis depuis l'autre source de lumière et réfléchi par un support d'enregistrement correspondant.

# FIG. 1 (PRIOR ART)

# FIG. 2

# FIG. 3

# FIG. 4

55    51

# FIG. 5

100

100a

107

130    35

31

105

103

110    109

101a

101

# FIG. 6A

PHASE
DIFFERENCE $\lambda$

DISTANCE FROM OPTICAL AXIS (h)

$-\lambda$

# FIG. 6B

PHASE
DIFFERENCE $\lambda$

DISTANCE FROM OPTICAL AXIS (h)

$-\lambda$

# FIG. 7

# FIG. 8

PHASE
DIFFERENCE

DISTANCE FROM OPTICAL AXIS (h)

# FIG. 9A

# FIG. 9B

# FIG. 9C

# FIG. 10

# FIG. 11

1.00 RELATIVE
FIELD HEIGHT
(1.000)²

TANGENTIAL　　　　　　　　　　　　　　SAGITAL

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 06082725 A

- JP 11016194 A